(19) Europäisches Patentamt
European Patent Office
Office européen des brevets

(11) EP 1 872 924 A1

(12) **EUROPEAN PATENT APPLICATION**
published in accordance with Art. 153(4) EPC

(43) Date of publication:
**02.01.2008 Bulletin 2008/01**

(21) Application number: **05806992.3**

(22) Date of filing: **15.11.2005**

(51) Int Cl.:
***B29C 44/00*** *(2006.01)* ***C08J 9/04*** *(2006.01)*
***B29K 105/24*** *(2006.01)* ***B29L 31/50*** *(2006.01)*
***C08L 9/00*** *(2006.01)* ***C08L 23/04*** *(2006.01)*

(86) International application number:
**PCT/JP2005/020904**

(87) International publication number:
**WO 2006/054531 (26.05.2006 Gazette 2006/21)**

(84) Designated Contracting States:
**IT**

(30) Priority: **16.11.2004 JP 2004331570**

(71) Applicant: **JSR Corporation**
**Tokyo 104-8410 (JP)**

(72) Inventors:
- **FURUICHI, Minoru, c/o JSR Corporation Tokyo 1048410 (JP)**
- **MORINO, Katsuaki, c/o JSR Corporation Tokyo 1048410 (JP)**
- **NAKAMURA, Takeo, c/o JSR Corporation Tokyo 1048410 (JP)**

(74) Representative: **TBK-Patent**
**Bavariaring 4-6**
**80336 München (DE)**

# (54) PROCESS FOR PRODUCING CROSSLINKED MOLDED FOAM

(57) There are provided a method for producing a crosslinked foam-molded article comprising (1) a pre-step of placing a predetermined amount of a thermoplastic elastomer composition that is a material for crosslinking foaming in a first cavity space (V1), (2) a first step of foam molding the above-mentioned thermoplastic elastomer composition in the above-mentioned first cavity space (V1) under heating and pressure to form a skin layer around a premolded article obtained, and (3) a second step of further crosslinking and foaming the above-mentioned premolded article under heating and pressure in a second cavity space (V2) more enlarged than the above-mentioned first cavity space (V1), and a molded article such as a shoe sole obtained thereby. A foam-molded article such as a shoe sole is obtained in which a molded sponge does not have variations in size, is excellent in thickness accuracy, has a moderate density and hardness, and is excellent in mold design transfer properties, because the sponge has the same shape as the mold, an operation process is simple, because a molded article is not excessively cut, it is excellent in economical efficiency because of no occurrence of a loss, and it is rich in functionality, because it can comply with various designs (it is possible to use in combination with another member by insertion or the like).

(Fig. 2)

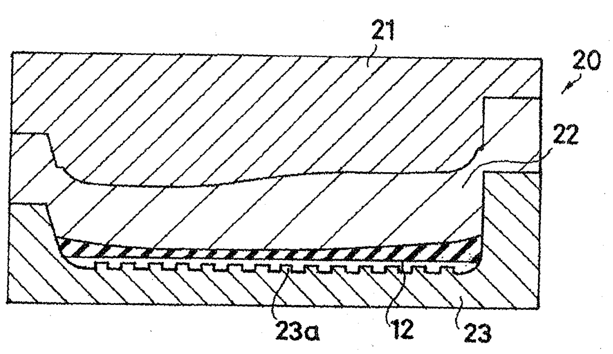


EP 1 872 924 A1

## Description

Technical Field

The present invention relates to a method for producing a crosslinked foam-molded article such as a crosslinked foamed shoe sole using a thermoplastic elastomer by crosslinking foam molding, and further to a foam-molded article obtained by molding or molding and crosslinking.

Background Art

Molding materials such as shoe sole materials tend to be decreased in weight, and for the purpose of weight saving, foams have been mostly used. Out-mold foaming methods have been employed for these, and have the problems of emerged variations in size of a crosslinked foam-molded article, failure for a crosslinked foam-molded article to be molded in accordance with a mold, indispensable secondary processing (punching, buffing, thermoforming and the like), a limitation of a design in molding to a simple shape, and the like. However, there is no foaming method as an alternative to the above-mentioned out-mold foaming, so that under the present situation, the production thereof is possible only by the above-mentioned crosslinking foaming. Recently, a short shot in-mold crosslinking foaming method is found as a production method similar to the above-mentioned crosslinking foaming. However, this is insufficient in skin formation of a crosslinked foam-molded article, resulting in the occurrence of poor molding appearance or in taking an extremely long molding time, which raises problems.
At present, as a method for producing a foamed sole material, there has been used

(1) a method of producing a plate-like foam with a plate-like mold and stamping out it to a shoe sole shape, or
(2) a method of performing foaming using a shoe sole-shaped mold, and then, further stamping out the resulting foam to a shoe sole shape from the purpose of size adjustment, using a curing press that has hitherto been used.

On the other hand, as a crosslinked foam used in the above-mentioned shoe sole material, there has been known a crosslinked foam using a natural rubber, a synthetic rubber or the like.
The crosslinked foam of the rubber family using a natural rubber or a synthetic rubber such as a styrene-butadiene rubber or a polybutadiene rubber is good in permanent set in fatigue and wet skid resistance. However, a product largely shrinks after crosslinking foaming, which causes high percent defective due to variations in product size, resulting in lack of rigidity of the foam (sponge). This is therefore practically a problem.

By the way, as a material suitable for such a shoe sole material excellent in wet skid resistance and low in the degree of shrinkage of the product after crosslinking foaming, 1,2-polybutadiene has come to be used. This 1,2-polybutadiene is not only excellent in wet skid resistance and low in the degree of shrinkage after crosslinking foaming, but also sufficient in mechanical strength ($T_B$, $E_B$), interlaminar shear strength, compressive permanent set and the like, and has come to be widely utilized as the shoe sole material.
Such 1,2-polybutadiene is controlled in crystallinity to an appropriate degree, and has a structure comprising crystalline-rich regions and amorphous portions. It has therefore not only a function as a thermoplastic elastomer, but also a function as a conventional cured material, a thermosetting resin increased in crosslinking density or a rubber, because it has carbon-carbon double bonds rich in chemical reactivity in its molecule. Further, this 1,2-polybutadiene is also applied as a modifier for another resin, thermoplastic elastomer or thermosetting elastomer, or as a polymer material for medical use.
However, when this 1, 2-polybutadiene is used for various new applications such as a shoe sole, insufficient processability or moldability, variations in molded sponge size due to out-mold foaming or the like has come to be pointed out. For example, when foaming conditions (temperature, time, pressure), takeoff conditions of a foam-molded article from a mold, a history of cooling conditions, and the like are not controlled, variations in size are large to cause the phenomenon of the easy occurrence of poor quality.
Further, in the conventional crosslinking foam molding, variations in sponge size is adjusted by cutting or the like, so that excess sponge is uneconomically outputted as scrap. Furthermore, there are many restrictions in design, and functionality is also insufficient.

There is patent document 1 as a prior art of the crosslinking foam molding. A crosslinked foam of patent document 1 has a moderate crosslinked structure, and is characterized by a high foaming ratio and no rough surface caused by defoaming, a soft feel and moreover a small compressive permanent set, and excellent shear strength characteristics and heat resistance. However, it has a complicated process of transferring a crosslinked foam to a cooling mold after crosslinking foaming, and performing remolding, which causes demerits of requiring many molds, also taking a long molding time, having poor productivity and requiring the use of a plurality of molds.
Patent Document 1: JP-A-2000-198889

Disclosure of the Invention

Problems That the Invention Is to Solve

An object of the present invention is to obtain a foam-molded article such as a shoe sole, in which a molded sponge does not have variations in size, is excellent in thickness accuracy, has a moderate density and hardness, and is excellent in mold design transfer properties, because the employment of a specific mold and processing system provides the sponge having the same shape as the mold, an operation process is simple, because a molded article is not excessively cut, it is excellent in economical efficiency because of no occurrence of a loss, and it is rich in functionality, because it can comply with various designs (it is possible to use in combination with another member by insertion or the like).
Another object of the present invention is to provide a crosslinking foam molding method in which, when a specific thermoplastic elastomer is used alone or in combination with another polymer component, and a crosslinking agent and a foaming agent are blended, it is possible to form a sponge having an arbitrary density by adjusting compounding of these.

Means for Solving the Problems

The present invention relates to a method for producing a crosslinked foam-molded article characterized in that it is a method for performing crosslinking foam molding of a thermoplastic elastomer composition using (a) a split mold comprising a lower mold, one or more intermediate molds and an upper mold, or (b) a slide mold comprising a lower mold and an upper mold, wherein the upper mold is slidable, and comprises

(1) a pre-step of placing a predetermined amount of the thermoplastic elastomer composition that is a material for crosslinking foaming in a first cavity space (V1) formed between the lower mold and the intermediate mold in the case of the split mold (a), or in a first cavity space (V1) formed between the lower mold and the upper mold slid downward in the case of the slide mold (b),
(2) a first step (hereinafter also referred to as "premolding") of foam molding the above-mentioned thermoplastic elastomer composition in the above-mentioned first cavity space (V1) under heating and pressure to form a skin layer around a premolded article obtained, and
(3) a second step (hereinafter also referred to as "main molding") of further crosslinking and foaming the above-mentioned premolded article under heating and pressure in a second cavity space (V2) formed between the lower mold and the upper mold by removing the intermediate mold and more enlarged than the first cavity space (V1) (a) in the case of the split mold, or in a second cavity space (V2) formed by sliding the upper mold upward and more enlarged than the first cavity space (V1) (b) in the case of the slide mold, wherein the amount of the above-mentioned thermoplastic elastomer composition placed is adjusted to a 0.7 to 1.2-fold excess in relation to the first cavity space (V1) as a condition of the first step, and further, the ratio V2/V1 of the second cavity space (V2) to the first cavity space (V1) is adjusted to 1.1 to 20.
Here, the crosslinked foam-molded article has the same shape as the mold, and is preferably molded by in-mold crosslinking molding.
Further, it is preferred that conditions of the above-mentioned first step comprise temperature: 120˚C to 170˚C, pressure: 20 to 200 kg/cm$^2$ and time: 1 to 30 minutes, and that conditions of the second step comprise temperature: 120˚C to 200˚C that is equal to or higher than that of the first step, pressure: 10 to 70 kg/cm$^2$ that is lower than that of the first step and time: 3 to 30 minutes.
Further, in the first step, the pressure is preferably reduced during application of pressure from the time when the material for crosslinking foaming is placed in the inside of the mold.
The thermoplastic elastomer compositions used in the present invention include one comprising 0.5 to 30 parts by weight of (C) a foaming agent and 0.02 to 20 parts by weight of (D) a crosslinking agent, based on 100 parts by weight of the total of 10 to 100% by weight of (A) thermoplastic elastomer and 90 to 0% by weight of (B) another polymer component (provided that (A)+(B)=100% by weight).
The above-mentioned component (A) includes at least one selected from the group consisting of syndiotactic 1,2-polybutadiene, an ethylene-vinyl acetate copolymer and a polyethylenic resin polymerized by a metallocene catalytic system.
Next, the present invention relates to a molded article such as a shoe sole obtained by the above-mentioned method for producing a crosslinked foam-molded article.

Advantages of the Invention

According to the method for producing a crosslinked foam-molded article of the present invention, molding for

obtaining a crosslinked foam-molded article such as a shoe sole is possible, in which a molded sponge does not have variations in size, is excellent in thickness accuracy, has a moderate density and hardness, and is excellent in mold design transfer properties, because the employment of a specific mold and processing system provides the sponge having the same shape as the mold, an operation process is simple, because a molded article is not excessively cut, it is excellent in economical efficiency because of no occurrence of a loss, and it is rich in functionality, because it can comply with various designs (it is possible to use in combination with another member by insertion or the like).
Further, in a thermoplastic elastomer composition used in the method for producing a crosslinked foam-molded article of the present invention, another polymer component is preferably blended with a specific thermoplastic elastomer as needed, and a crosslinking agent and a foaming agent are blended therewith. Accordingly, it is possible to form a sponge having an arbitrary density by adjusting compounding of these.

Brief Description of the Drawings

[Fig. 1] Fig. 1 is a perspective view of greenware used in crosslinking foam molding of the present invention.
[Fig. 2] Fig. 2 is a cross sectional constitutional view of a split mold comprising an upper mold, an intermediate mold and a lower mold.
[Fig. 3] Fig. 3 is a cross sectional constitutional view of a mold comprising an upper mold and a lower mold.
[Fig. 4] Fig. 4 is a flow sheet of compression molding using a slide mold, wherein Fig. 4(a) shows a state in which an upper mold is slid to move downward, and Fig. 4(b) shows a state in which a lower mold is slid to move upward.

Description of Reference Numerals and Signs

11 Plate Material
12 Greenware
12' Shoe Sole
20 Split Mold
21 Upper Mold
22 Intermediate Mold
23 Lower Mold
23a Unevenness
40 Slide Mold
41 Upper Mold
42 Lower Mold
43 Knock Pin
44 Spring

Best Mode for Carrying Out the Invention

<Thermoplastic Elastomer Composition>

The thermoplastic elastomer composition used in crosslinking foam molding of the present invention is preferably (A) a thermoplastic elastomer alone, or contains, in addition to this and (B) another polymer component, (C) a foaming agent and (D) a crosslinking agent, and (E) an additive other than the above-mentioned components (A) to (D) as needed.

(A) Thermoplastic Elastomer

The thermoplastic elastomers used in component (A) of the present invention preferably include 1,2-polybutadiene, an ethylene-vinyl acetate copolymer and a polyethylenic resin polymerized by a metallocene catalytic system.
1,2-Polybutadiene (A) of the present invention as used herein has a glass transition temperature of -50˚C to -10˚C, and preferably -40˚C to -15˚C.
1,2-Polybutadiene (A) of the present invention having a specified glass transition temperature is preferably syndiotactic 1,2-polybutadiene having a degree of crystallinity of 5% or more (hereinafter also referred to as "syndiotactic 1,2-polybutadiene") or one obtained by slurry polymerization of 1,3-butadiene in an aqueous medium (hereinafter also

referred to as "1,2-polybutadiene (A) of the latter").

Of these, syndiotactic 1,2-polybutadiene (A) of the former used in the present invention is, for example, one having a 1, 2-bond content of 70% or more, which is obtained, for example, by polymerizing butadiene in the presence of a catalyst containing a cobalt compound and an aluminoxane, but should not be construed as being limited to this production method.

The 1,2-bond content in butadiene bond units of syndiotactic 1,2-polybutadiene (A) used in the present invention is usually 70% or more, preferably 80% or more, and more preferably 90% or more. When the 1,2-bond content is 70% or more, the 1,2-polybutadiene exhibits properties as a good thermoplastic elastomer.

Syndiotactic 1,2-polybutadiene (A) used in the present invention may be copolymerized with a small amount of a conjugated diene other than butadiene. The conjugated dienes other than butadiene include 1,3-pentadiene, a higher alkyl group-substituted 1,3-butadiene derivative, a 2-alkyl-substituted 1,3-butadiene and the like.
Of these, the higher alkyl group-substituted 1,3-butadiene derivatives include 1-pentyl-1,3-butadiene, 1-hexyl-1,3-butadiene, 1-heptyl-1,3-butadiene, 1-octyl-1,3-butadiene and the like.

Typical examples of the 2-alkyl-substituted 1,3-butadienes as used herein include 2-methyl-1,3-butadiene (isoprene), 2-ethyl-1,3-butadiene, 2-propyl-1,3-butadiene, 2-isopropyl-1,3-butadiene, 2-butyl-1,3-butadiene, 2-isobutyl-1,3-butadiene, 2-amyl-1,3-butadiene, 2-isoamyl-1,3-butadiene, 2-hexyl-1,3-butadiene, 2-cyclohexyl-1,3-butadiene, 2-isohexyl-1,3-butadiene, 2-heptyl-1,3-butadiene, 2-iso-heptyl-1,3-butadiene, 2-octyl-1,3-butadiene, 2-isooctyl-1,3-butadiene and the like. Of these conjugated dienes, preferred examples of the conjugated dienes copolymerized with butadiene include isoprene and 1, 3-pentadiene. The content of 1,3-butadiene in monomer components subjected to polymerization is preferably 50 mol% or more, and particularly 70 mol% or more.

Syndiotactic 1,2-polybutadiene (A) used in the present invention is obtained by polymerizing butadiene, for example, in the presence of the catalyst containing the cobalt compound and the aluminoxane, as described above. The above-mentioned cobalt compounds include preferably an organic acid salt of cobalt having 4 or more carbon atoms. Specific examples of the organic acid salts of cobalt include a butyrate, a hexanoate, a heptylate, an octylate such as 2-ethylhexylic acid, a decanoate, a salt of a higher fatty acid such as stearic acid, oleic acid or erucic acid, a benzoate, an alkyl-, aralkyl- or allyl-substituted benzoate such as a tolylate, a xylylate or an ethylbenzoic acid, a naphthoate and an alkyl-, aralkyl- or allyl-substituted naphthoate. Of these, so-called octylate of 2-ethylhexylic acid, a stearate and a benzoate are preferred for excellent solubility in a hydrocarbon solvent.

The above-mentioned aluminoxanes include, for example, one represented by the following general formula (I) or general formula (II):

[GENERAL FORMULA 1]

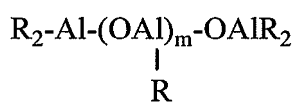

-------(I)

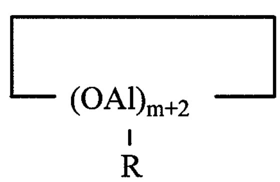

-----(II)

In the aluminoxane represented by general formula (I) or (II), R is a hydrocarbon group such as a methyl group, an ethyl group, a propyl group or a butyl group, preferably a methyl group or an ethyl group, and particularly preferably a methyl group. m is an integer of 2 or more, preferably an integer of 5 or more, and more preferably an integer of 10 to 100. Specific examples of the aluminoxanes include methylaluminoxane, ethyl-aluminoxane, propylaluminoxane, butylaluminoxane and the like, and methylaluminoxane is particularly preferred.

It is very preferred that the polymerization catalyst contains a phosphine compound, in addition to the above-mentioned cobalt compound and aminoxane. The phosphine compound is a component effective for activation of the polymerization catalyst and the control of vinyl bond structure and crystallinity, and preferably includes an organic phosphorus compound represented by the following general formula (III):

$P(Ar)_n(R')_{3-n}$ (III)

In general formula (III), Ar represents a group shown below:

[GENERAL FORMULA 2]

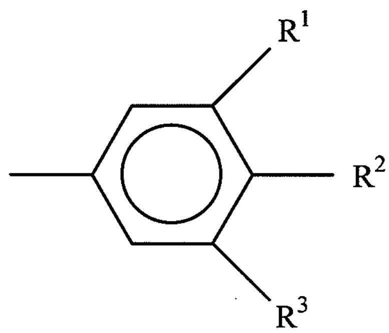

(In the above-mentioned group, $R^1$, $R^2$ and $R^3$, which may be the same or different, each represent a hydrogen atom, an alkyl group preferably having 1 to 6 carbon atoms, a halogen atom, an alkoxy group preferably having 1 to 6 carbon atoms or an aryl group preferably having 6 to 12 carbon atoms.)

Further, in general formula (III), R' represents a cycloalkyl group or an alkyl-substituted cycloalkyl group, and n is an integer of 0 to 3.

Specific examples of the phosphine compounds represented by general formula (III) include tri(3-methylphenyl) phosphine, tri(3-ethylphenyl)phosphine, tri(3,5-dimethylphenyl)-phosphine, tri(3,4-dimethylphenyl)phosphine, tri(3-isopropylphenyl)phosphine, tri(3-t-butylphenyl)phosphine, tri-(3,5-diethylphenyl)phosphine, tri(3-methyl-5-ethylphenyl)-phosphine, tri(3-phenylphenyl)phosphine, tri(3,4,5-trimethylphenyl)phosphine, tri(4-methoxy-3,5-dimethylphenyl)-phosphine, tri(4-ethoxy-3,5-diethylphenyl)phosphine, tri-(4-butoxy-3,5-dibutylphenyl)phosphine, tri(p-methoxyphenyl)phosphine, tricyclohexylphosphine, dicyclohexyl-phenylphosphine, tribenzylphosphine, tri(4-methylphenyl-phosphine), tri(4-ethylphenylphosphine) and the like. Of these, particularly preferred examples thereof include triphenylphosphine, tri(3-methylphenyl)phosphine, tri(4-methoxy-3,5-dimethylphenyl)phosphine and the like.

Further, as the cobalt compound, a compound represented by the following general formula (IV) can be used.

[GENERAL FORMULA 3]

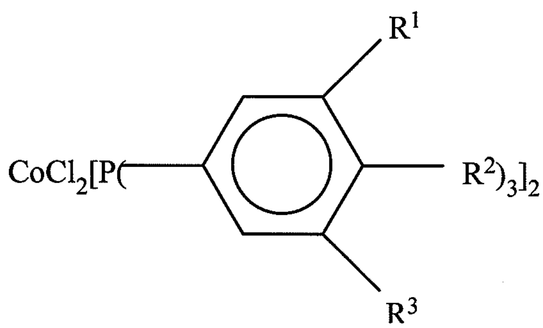 ------(IV)

The compound represented by the above-mentioned general formula (IV) is a complex having a phosphine compound in which n is 3 in the above-mentioned general formula (III), as a ligand to cobalt chloride. In using this cobalt compound, one previously synthesized may be used, or a method of contacting cobalt chloride with the phosphine compound in a polymerization system may be used. The amount of 1,2-bonds and the degree of crystallinity of the resulting syndiotactic 1,2-polybutadiene can be controlled by variously selecting the phosphine compound in the complex.

As specific examples of the cobalt compounds represented by the above-mentioned general formula (IV), there can be used cobalt bis(triphenylphosphine) dichloride, cobalt bis[tris-(3-methylphenylphosphine)] dichloride, cobalt bis [tris(3-ethylphenylphosphine)] dichloride, cobalt bis[tris(4-methylphenylphosphine)] dichloride, cobalt bis[tris(3,5-dimethylphenylphosphine)] dichloride, cobalt bis[tris(3,4-dimethylphenylphosphine)] dichloride, cobalt bis[tris(3-isopropylphenylphosphine)] dichloride, cobalt bis[tris(3-t-butylphenylphosphine)] dichloride, cobalt bis[tris(3,5-diethylphenylphosphine)] dichloride, cobalt bis[tris(3-methyl-5-ethylphenylphosphine)] dichloride, cobalt bis-[tris(3-phenylphenylphosphine)] dichloride, cobalt bis-[tris(3,4,5-trimethylphenylphosphine)] dichloride, cobalt bis[tris(4-methoxy-3,5-dimethylphenylphosphine)] dichloride, cobalt bis[tris(4-ethoxy-3,5-diethylphenylphosphine)] dichloride, cobalt bis[tris(4-butoxy-3,5-dibutylphenyl-phosphine)] dichloride, cobalt bis[tris(4-methoxyphenylphosphine)] dichloride, cobalt bis[tris(3-methoxyphenylphosphine)] dichloride, cobalt bis[tris(4-dodecylphenyl-phosphine)] dichloride, cobalt bis[tris(4-ethylphenylphosphine)] dichloride and the like.

Of these, particularly preferred are cobalt bis(triphenylphosphine) dichloride, cobalt bis[tris(3-methyl-phenylphosphine)] dichloride, cobalt bis[tris(3,5-dimethyl-phenylphosphine)] dichloride, cobalt bis[tris(4-methoxy-3,5-dimethylphenylphosphine)] dichloride and the like.

As the amount of the catalyst used, the cobalt compound is used in an amount of 0.001 to 1 mmol, preferably about 0.01 to about 0.5 mmol, in terms of a cobalt atom per mole of butadiene for homopolymerization of butadiene, and per mole of the total amount of butadiene and a conjugated diene other than butadiene for copolymerization. Further, the amount of the phosphine compound used is usually from 0.1 to 50, preferably from 0.5 to 20, and more preferably from 1 to 20, as the atomic ratio of phosphorus to cobalt (P/Co). Furthermore, the amount of the aluminoxane used is usually from 4 to $10^7$, and preferably from 10 to $10^6$, as the atomic ratio of aluminum to cobalt of the cobalt compound (Al/Co). When the complex represented by general formula (IV) is used, the amount of the aluminoxane used follows the above description, taking the amount of the phosphine compound used as 2 by the atomic ratio of phosphorus to cobalt (P/Co).

Inert organic solvents used as polymerization solvents include, for example, aromatic hydrocarbon solvents such as benzene, toluene, xylene and cumene, aliphatic hydrocarbon solvents such as n-pentane, n-hexane and n-butane, alicyclic hydrocarbon solvents such as cyclopentane, methylcyclopentane and cyclohexane, and mixtures thereof.

The polymerization temperature is usually from -50 to 120°C, and preferably from -20 to 100°C.

The polymerization reaction may be either batch-wise or continuous. The monomer concentration in the solvent is usually from 5 to 50% by weight, and preferably from 10 to 35% by weight.

Further, for producing the polymer, in order not to inactivate the catalyst and polymer of the present invention, it is necessary to consider so that contamination with a compound having an inactivating function such as oxygen, water or carbon dioxide in a polymerization system is decreased to the utmost. When the polymerization reaction proceeds to a desired stage, an alcohol, another polymerization terminator, an antiaging agent, an antioxidant, an ultraviolet absorber and the like are added to the reaction mixture, and then, the polymer formed is separated, washed and dried according to conventional methods, thereby being able to obtain syndiotactic 1,2-polybutadiene used in the present invention.

On the other hand, 1,2-polybutadiene (A) of the latter can be obtained, for example, by aqueous polymerization of 1,3-butadiene described in JP-B-3-76326 (production method (1)).

According to production method (1), a conjugated diene such as 1,3-butadiene is polymerized in an aqueous system in the presence of a catalytic system in which at least one selected from the group consisting of carbon disulfide, phenylisothiocyanic acid and a xanthogen compound is allowed to coexist with a catalyst obtained by previously bringing a cobalt compound (A) into contact with a hydrogenated metal compound (B) of a group III metal in the periodic table in the presence of the conjugated diene in an amount of 1 to 100 times the molar quantity of (A).

Details of production method (1) described above are supplied in JP-B-3-76326, column 3, line 41 to column 7, line 29.

Further, 1,2-polybutadiene (A) of the latter of the present invention can also be obtained, for example, by a suspension polymerization method described in JP-B-5-86411 (production method (2)).

This production method (2) comprises:

step (I) of emulsifying and dispersing a first catalyst component solution in water in the presence of an emulsifier to prepare an emulsion, thereby forming a group of minute oil droplets comprising the first catalyst component solution, and

step (II) of adding a conjugated diene monomer (1,3-butadiene) into the system obtained in step (I), and further adding a second catalyst component to conduct polymerization.

Here, the first catalyst component solution is obtained by bringing (a) a cobalt compound into contact with (b) an organic metal compound formed by a group II or group III metal in the periodic table or a hydrogen compound in the presence of (c) the conjugated diene in an amount of 1 to 1000 times the molar quantity of (a) the above-mentioned cobalt compound. Further, the above-mentioned second catalyst component comprises (d) at least one compound selected from carbon

disulfide, phenylisothiocyanic acid and a xanthogen compound.

Details of production method (2) described above are supplied in JP-B-5-86411, column 3, line 36 to column 10, line 6.

Furthermore, 1,2-polybutadiene (A) of the latter of the present invention can also be obtained, for example, by a suspension polymerization method of syndiotactic 1,2-polybutadiene described in JP-A-6-25311 (production method (3)).

This suspension polymerization method will be described below, applying the above-mentioned publication of the patent application correspondingly.

That is to say, production method (3) is a method of using a catalyst comprising a transition metal compound, an organic metal compound of a group I to III metal and a compound selected from the group consisting of carbon disulfide, phenylisothiocyanic acid and a xanthogen compound, and conducting suspension polymerization of 1, 3-butadiene in an aqueous medium thereby obtaining particles of syndiotactic 1,2-polybutadiene, and a suspension polymerization method of syndiotactic 1,2-polybutadiene comprising (a) allowing a high-density inert organic solvent having a specific density of 1.1 or more to coexist in an aqueous medium, (b) adjusting the amount ratio of the high-density inert organic solvent to 10 to 100 parts by volume based on 100 parts by volume of 1,3-butadiene, and (c) allowing one or two or more kinds of compounds (a fourth component) selected from the group consisting of an alcohol, an aldehyde, a ketone, an ester and a nitrile to coexist in the above-mentioned aqueous medium, thereby conducting polymerization (claim 1 of production method (3)), wherein syndiotactic 1,2-polybutadiene obtained by the suspension polymerization method is also referred to as "SPB".

According to production method (3), the high-density inert organic solvent such as methylene chloride is allowed to coexist in the aqueous medium, thereby increasing the specific gravity of an organic phase comprising 1,3-butadiene, the catalyst and the like. Further, the fourth component is allowed to coexist, thereby making it possible to obtain small particle-sized SPB having a desired melting point without strong mechanical shearing force.

In 1,2-polybutadiene (A) used in the present invention, it is preferred that the relationship between the melting point (Tm) and glass transition temperature (Tg) thereof satisfies the following equation (1):

$$120 \leq (Tm-Tg) \leq 160 \qquad (1)$$

(Tm-Tg) is more preferably within the range of 125 to 155.

The effects of being good in molding processability and excellent in cold resistance, cold impact resistance and wear resistance are obtained by adjusting (Tm-Tg) within the above-mentioned range.

In order to satisfy the above-mentioned equation (1), it is necessary to select the polymerization conditions (the catalyst, melting point adjusting agent, solvent and polymerization temperature).

In addition, 1,2-polybutadiene (A) used in the present invention provides sufficient strength even in a state where it is used alone without crosslinking, so that it is suitable for non-crosslink molding applications such as for industrial parts and for film use by injection molding, extrusion molding or the like. In that case, there is no particular limitation on the processing method, and mixing is possible by melt kneading using a roll, a kneader, a Banbury mixer, a screw extruder, a feeder-ruder extruder or the like ordinarily used in processing a resin or a rubber.

1,2-Polybutadiene (A) used in the present invention is previously oil extended, and can be used as oil-extended 1,2-polybutadiene (A').

There is no particular limitation on the extender oil used for preparing the oil-extended 1,2-polybutadiene (A'), as long as it is an extender oil or a softening agent ordinarily used in a diene-based polymer. Suitable examples thereof include, for example, extender oils of the mineral oil family.

Further, as thermoplastic elastomer (A), there are used an ethylene-vinyl acetate copolymer and a polyethylenic resin polymerized by a metallocene catalytic system, as well as 1,2-polybutadiene described above.

Of these, as the ethylene-vinyl acetate copolymer, a copolymer having a vinyl acetate content of 10% by weight or more is preferred. In particular, in the present invention, it is preferred to use an ethylene-vinyl acetate copolymer having a vinyl acetate content within the range of 15 to 45% by weight. The melt flow index of such a copolymer is usually from 0.2 to 400 g/10 min (190 ˚C, 2.16 kg load), and preferably from 0.5 to 50 g/10 min.

On the other hand, the polyethylenic resin polymerized by a metallocene catalytic system is produced by polymerizing ethylene or ethylene and an $\alpha$-olefin having 3 or more carbon atoms using the metallocene catalytic system. In that case, in order to obtain the desired melt flow rate, what is necessary is just to use a molecular weight modifier such as hydrogen. The melt flow index of such a polyethylenic resin is usually from 0.1 to 30 g/10 min (190 ˚C, 2.16 kg load), and preferably from 0.5 to 25 g/10 min.

Here, polymerization methods using the metallocene catalytic system include, for example, a method described in Domestic Re-Publication of PCT International Publication No. WO95/15985.

Further, the other thermoplastic elastomers include, for example, according to the classification by the chemical

composition of hard segments, a styrenic thermoplastic elastomer (referred to as SBC for brevity, hereinafter, symbols in parentheses indicates abbreviation), an olefinic thermoplastic elastomer (TPO), a urethanic thermoplastic elastomer (TPU), an esteric thermoplastic elastomer (TPEE), an amidic thermoplastic elastomer (TPAE) and the like. In addition, there are a vinyl chloride-based thermoplastic elastomer (TPVC), an ion cluster type thermoplastic elastomer (ionomer), a fluorinated thermoplastic elastomer containing a fluorocarbon resin as a restricting block, and the like. (Of the thermoplastic elastomers by resin/rubber blending, TPO by dynamic crosslinking is called TPV in some cases in which a rubber component acting as a soft segment is kneaded while crosslinking to reduce the size of dispersed rubber particles, thereby improving the performances.) These thermoplastic elastomers include only one kind or a mixture of two or more of them.

As SBC, preferred is a styrene-butadiene-styrene block copolymer (SBS), a styrene-isoprene-styrene block copolymer (SIS), a styrene-ethylene-butylene-styrene block copolymer (SEBS), a functional group-imparting type SEBS (f-SEBS), a styrene-ethylene-propylene-styrene block copolymer (SEPS) or a hydrogen addition type styrene-butadiene polymer (HSBR) of a random type.

As TPO, preferred is a simple blend type TPO (s-TPO) obtained by mixing an elastomer such as EP, EPDM, EBM or EBDM with a polyolefin such as PP or PE, and compounding the mixture by a mixer such as a Banbury or a plastomill, an implanted TPO (i-TPO) obtained by polymerizing an olefin monomer as a hard segment, and then, polymerizing an olefin monomer as a soft segment, in the same plant or the same reactor vessel (the order may be reversed), or a dynamic curing type TPO (TPV) prepared by curing the rubber concurrently with mixing by a mixer such as a Banbury or a plastomill. Further, as TPV, preferred is PP-EPDM (hereinafter, the description on the left indicates a hard segment, and the description on the right indicates a soft segment) in which PP as a hard segment and EPDM as a soft segment are combined, PP-nitrile rubber (NBR), PP-acrylic rubber (ACM), PP-natural rubber (NR), PP-butyl rubber (IIR), PE-EPDM, PE-NR, nylon-NBR, nylon-ACM, polyester-chloroprene (CR) or PVC-NBR.

(B) Another Polymer Component

Another polymer component (B) used in the present invention includes at least one selected from the group consisting of a natural rubber, a synthetic rubber and a thermoplastic resin, other than thermoplastic elastomer (A). As another polymer component as component (B), the natural rubber or synthetic rubber that is a diene-based rubber is preferred.

Of these, the natural rubber (NR) can be used without any particular limitation, and examples thereof include one or a mixture of two or more of gum arabic, Indian gum and the like.

Further, the synthetic rubber can be used without any particular limitation, and examples thereof include one or a mixture of two or more of a polybutadiene rubber other than component (A), a polyisoprene rubber, an isobutylene-isoprene rubber, an ethylene-$\alpha$-olefin-(diene) copolymer (for example, EPM, EBM, EOM, EPDM, EBDM or the like), an aromatic vinyl compound-conjugated diene compound-($\alpha$-olefin) copolymer (for example, SBR, SBS or SEBS), an acrylonitrile-butadiene rubber, a fluororubber, a silicone rubber, and a halogenated butyl rubber (for example, chlorinated butyl rubber or brominated butyl rubber).

Furthermore, the thermoplastic resin of the abovementioned component (B) can be used without any particular limitation, as long as it is a thermoplastic resin having a plasticizing temperature of 50 to 250˚C, and examples thereof include one or a mixture of two or more of a styrenic resin (for example, polystyrene, a butadiene-styrene copolymer, an acrylonitrile-styrene copolymer, an acrylonitrilebutadiene-styrene copolymer or the like), an ABS resin, an AES resin, an AAS resin, polyethylene other than component (A), polypropylene, an ethylene-propylene resin other than component (A), polyvinyl chloride, polyvinylidene chloride, polybutene, a polycarbonate, polymethyl methacrylate and the like.

Of the thermoplastic resins, preferred are polystyrene, a butadiene-styrene copolymer and an ethylene-propylene resin other than component (A).

The above-mentioned natural rubber, synthetic rubber, thermoplastic resin and the like, which are another polymer component (B) other than thermoplastic elastomer (A) can also be used alone or as a mixture of two or more of them.

In the composition of the present invention, the above-mentioned polymer component is used either as component (A) alone or as a combination of component (A) and component (B).

In the present invention, as for the compounding ratio of the polymer components, thermoplastic elastomer (A) is from 10 to 100% by weight, preferably from 10 to 90% by weight, and more preferably from 15 to 80% by weight; and another polymer component (B) is 90 to 0% by weight, preferably from 90 to 10% by weight, and more preferably from 85 to 20% by weight [provided that (A)+(B)=100% by weight].

When component (A) is less than 10% by weight, foamability of a foam is impaired (it is difficult to obtain a specific gravity of 0.5 or less), and the foam is liable to contract, lacking in Hs (practical hardness) to be easily deformable, lacking in $T_B$ (tensile strength) to have no durability, and lacking in tearing strength not to satisfy durability, which poses a practical problem. On the other hand, when component (A) exceeds 90% by weight, rubber elasticity is impaired,

resulting in a resin-like molded article, which causes the possibility of losing commercial value in applications such as footwear. Further, when component (B) exceeds 90% by weight, wear resistance is impaired.

(C) Foaming Agent

As the foaming agent, there can be used an inorganic foaming agent or organic foaming agent that is known itself. Specific examples of the foaming agents include sodium bicarbonate, ammonium bicarbonate, sodium carbonate, ammonium carbonate, azodicarbonamide (ADCA), dinitrosopentamethylenetetramine (DNPT), p,p'-oxybisbenzenesulfonylhydrazine (OBSH), dinitrosoterephthalamide, azobisisobutyronitrile, barium azodicarboxylate, sulfonylhydrazides such as toluenesulfonylhydrazide, and the like.
Above all, azodicarbonamide (ADCA), dinitrosopentamethylenetetramine (DNPT) and p,p'-oxybisbenzenesulfonylhydrazine (OBSH) are more preferred.
These foaming agents may be used in combination with a known foaming aid such as urea or a urea derivative. The urea derivatives include Cellton NP manufactured by Sankyo Kasei Co., Ltd. and Cellpaste K5 manufactured by Eiwa Chemical Ind. Co., Ltd.
The compounding amount of the foaming agent is from 0.5 to 30 parts by weight, and preferably from 1 to 15 parts by weight, based on 100 parts by weight of the total of components (A) and (B), although it varies depending on the kind of polymer of the molding material and the use of the molded article. When the amount of the foaming agent used is less than 0.5 part by weight, only the foam having low expansion ratio is obtained. On the other hand, when it exceeds 30 parts by weight, a gas generated by decomposition of the foaming agent is increased to extraordinarily elevate the gas pressure, which causes the generation of cracks in the foam obtained in some cases. The foaming aid can be properly used in an amount of 10% to 200% based on the foaming agent as needed.
Further, as a method for foaming the composition, there is a method of allowing carbon dioxide, water and the like to be contained in specific amounts, and obtaining a foam-molded article by various forming methods. For example, in the case of injection molding, the composition containing carbon dioxide in an amount of about 0.5 part by weight based on 100 parts by weight of the total of components (A) and (B) is not foamed by high temperature and high pressure, when it is in a metering portion in a plasticized/molten state. However, when a mold is filled with it by injection molding, carbon dioxide contained is vaporized by a reduction in pressure, thereby being able to obtain a molded article the inside of which is foamed.

(D) Crosslinking Agent (or Crosslinking Agent and Crosslinking Aid)

Crosslinking agent (D) is incorporated together with the above-mentioned foaming agent (C) into the composition of the present invention.
Component (D) includes at least one selected from the group consisting of sulfur, a compound that generates sulfur by heating, an organic peroxide, a multifunctional monomer and a silanol compound. Besides, in crosslinking, after crosslinking can also be performed by a combination of the multifunctional monomer and electron beam irradiation, or a combination of a photosensitizer and ultraviolet irradiation.
As sulfur, there can be used powdered sulfur, precipitated sulfur, colloidal sulfur, surface-treated sulfur or the like. Further, as the compounds that generate sulfur by heating, there can be used tetramethylthiuram disulfide, tetraethylthiuram disulfide and the like.
As vulcanization accelerators used in combination with sulfur or the compounds which generate sulfur by heating, there are, for example, tetramethylthiuram disulfide (TMTD), Noxydiethylene-2-benzothiazolylsulfenamide (OBS), N-cyclohexyl-2-benzothiazylsulfenamide (CBS), dibenzothiazyl disulfide (MBTS), 2-mercaptobenzothiazole (MBT), zinc dinbutyldithiocarbamate (ZnBDC), zinc dimethyldithiocarbamate (ZnMDC) and the like.
In the case of organic peroxide crosslinking blending, there can be used dicumyl peroxide, di-t-butylperoxy-3,3,5-trimethylcyclohexane, a,a'-di-t-butylperoxy-di-p-diisopropylbenzene, 1,3-bis(t-butylperoxyisopropyl)benzene, n-butyl-4,4-bis-t-butyl peroxyvalerate, t-butyl peroxybenzoate, t-butylperoxyisopropyl carbonate, 2,5-dimethyl-2, 5-di (t-butylperoxy) hexane and the like. Of these, preferred are dicumyl peroxide, di-t-butylperoxy-3,3,5-trimethylcyclohexane, $\alpha,\alpha'$-di-t-butylperoxy-di-p-diisopropylbenzene and 1,3-bis(t-butylperoxyisopropyl)benzene. Further, commercial products of the organic peroxides include Perhexa 3M, Percumyl D and Peroximone F manufactured by Nippon Oil and Fats Co., Ltd., and Trigonox 29, Kayacumyl D and Parkadox 14 manufactured by Nippon Kayaku Co., Ltd., and the like.
Furthermore, in the case of organic peroxide crosslinking, various multifunctional monomers and the like may be added at the same time. Specific examples of the multifunctional monomers are trimethylolpropane trimethacrylate, ethylene glycol dimethacrylate, triallyl isocyanate, diallyl phthalate and the like. The organic peroxide/multifunctional monomer (molar ratio) in this case is usually from 1/1 to 1/50, and preferably from 1/2 to 1/40.
Moreover, it is also a useful means to use sulfur (including the vulcanization accelerator) and the organic peroxide in combination, thereby balancing crosslinking foaming and physical properties. The sulfur/organic peroxide (molar ratio)

in this case is usually from 50/l to 1/50, and preferably from 40/1 to 1/40.

The amount of the above component (D) used is, for example, from 0.02 to 20 parts by weight, and preferably from 0.05 to 15 parts by weight, in terms of the weight of the compound such as sulfur or the organic peroxide, based on 100 parts by weight of the total of components (A) and (B), and appropriately increased or decreased within this range to use depending on the combination with the vulcanization accelerator, the multifunctional monomer or the like. Less than 0.02 part by weight results in insufficient crosslinking with unsatisfied heat resistance, mechanical strength and compressive permanent set (compression set). On the other hand, exceeding 20 parts by weight results in excess crosslinking, which makes crosslinked matter brittle. Evaluation is therefore impossible, and the molded article of the present invention can not be obtained.

(E) Softening Agent

Softening agent (E) is an extender oil other than one used in oil-extended 1,2-polybutadiene (A'), and can be blend with the composition of the present invention, separately. The extender oils include the same kind of extender oils as the extender oil used in component (A'). In this case, the amount of the extender oil blended is from 0 to 300 parts by weight, and preferably from about 1 to 100 parts by weight, based on 100 parts by weight of the total of components (A) and (B).

(F) Inorganic Filler

Inorganic filler (F) blended with the composition of the present invention includes, for example, glass fiber, glass beads, potassium titanate, talc, mica, barium sulfate, carbon black, silica, carbon-silica dual phase filler, clay, calcium carbonate, magnesium carbonate and the like. The amount of inorganic filler (F) blended is usually from 0 to 300 parts by weight, and preferably from 1 to 200 parts by weight, based on 100 parts by weight of the total of components (A) and (B).

Of the inorganic fillers, the silica includes, for example, wet process silica, dry process silica, synthetic silicate-based silica and the like. High in reinforcing effect is silica having a small particle size. Small particle size-high aggregation type (high surface area, high oil absorption) one is good in dispersibility in the polymer, so that it is preferred in respect to physical properties and processability. The average particle size of the silica is preferably from 5 to 60 $\mu$m, and more preferably from 10 to 35 $\mu$m, by the primary particle size. Further, the specific surface area (BET method) thereof is preferably from 45 to 280 $m^2$/g.

As the silane coupling agent, preferred is one having both a functional group reactable with a silica surface, such as an alkoxysilyl group, and a functional group reactable with a carbon-carbon double bond of the polymer, such as a polysulfide, a mercapto group or an epoxy group, in its molecule. Examples thereof include bis(3-triethoxysilylpropyl) tetrasulfide, bis(2-triethoxysilylethyl) tetrasulfide, 3-mercaptopropyltrimethoxysilane, 3-triethoxysilylpropyl-N,N-dimethylthiocarbamoyl tetrasulfide, 3-triethoxysilylpropylbenzothiazole tetrasulfide and the like. The use of such a silane coupling agent can enhance its reinforcing effect, when the carbon black and the silica are used simultaneously as the filling agent, or when the carbon-silica dual phase filler is used as the filling agent.

(G) Other Additives

To the composition of the present invention, there can be added a flame retardant, an antioxidant, a lubricant (slip agent), a coloring agent, an ultraviolet absorber, an antistatic agent, a thermal stabilizer, an antiaging agent, a processing aid, a light (weather)-resisting agent, an antimicrobial agent and the like as needed within the range in which the object is not impaired.

The flame retardants usable in the present invention include a halogen-based flame retardant, a phosphorus-based flame retardant and an inorganic flame retardant. However, considering the dioxin problem, the phosphorus-based flame retardant and the inorganic flame retardant which contain no halogen are preferred.

As the inorganic flame retardants, there can be exemplified magnesium hydroxide, aluminum hydroxide, zinc borate, barium borate, kaolin clay, calcium carbonate, alum, basic magnesium carbonate, calcium hydroxide and the like.

The above-mentioned flame retardants include a so-called flame retarding aid that is low in flame retardency-exhibiting effect of itself, but synergistically exhibits more excellent effect by using in combination with another flame retardant.

The composition of the present invention can prolong product life by using the antioxidant. Although the antioxidants used in this case include a phenolic antioxidant, a sulfur-based antioxidant, an amine-based antioxidant and the like, the phenolic antioxidant is particularly preferred.

Specific examples of the above-mentioned phenolic antioxidants include styrenated phenol, 2,6-di-t-butyl-4-methylphenol, 2,6-di-t-butyl-p-ethylphenol, 2,4,6-tri-t-butylphenol, butylhydroxyanisole, 1-hydroxy-3-methyl-4-isopropylbenzene, mono-t-butyl-p-cresol, mono-t-butyl-m-cresol, 2,4-dimethyl-6-t-butylphenol, butyrated bisphenol A, 2,2'-methylene-bis(4-methyl-6-t-butylphenol), 2,2'-methylene-bis(4-ethyl-6-t-butylphenol), 2,2'-methylene-bis(4-methyl-6-t-nonylphenol), 2,2'-isobutylidene-bis(4,6-dimethylphenol), 4,4'-butylidene-bis(3-methyl-6-t-butylphenol), 4,4'-methylene-bis(2,6-di-t-butylphenol), 2,2-thio-bis(4-methyl-6-t-butylphenol), 4,4'-thio-bis(3-methyl-6-t-butylphenol), 4,4'-thio-bis(2-methyl-6-butylphenol), 4,4'-thio-bis(6-t-butyl-3-methylphenol), bis(3-methyl-4-hydroxy-5-t-butylbenzene) sulfide, 2,2-thio[diethyl-bis-3-(3,5-di-t-butyl-4-hydroxyphenol) propionate], bis[3,3-bis(4'-hydroxy--3'-t-butylphenol)butyric acid] glycol ester, bis [2-(2-hydroxy-5-methyl-3-t-butylbenzene)-4-methyl-6-t-butylphenyl ] terephthalate, 1,3,5-tris(3',5'-di-t-butyl-4'-hydroxybenzyl) isocyanurate, N,N'-hexamethylene-bis(3,5-di-t-butyl-4-hydroxy-hydroxyamide), N-octadecyl-3-(4'-hydroxy-3',5'-di-t-butylphenol) propionate, tetrakis[methylene-(3',5'-di-t-butyl-4-hydroxyphenyl) propionate]methane, 1,1'-bis(4-hydroxyphenyl)cyclohexane, mono($\alpha$-methylbenzene)phenol, di($\alpha$-methylbenzyl)phenol, tri($\alpha$-methylbenzyl)phenol, bis (2'-hydroxy-3'-t-butyl-5'-methylbenzyl)-4-methylphenol, 2,5-di-t-amylhydroquinone, 2,6-dibutyl-$\alpha$-dimethylamino-p-cresol, 2,5-di-t-butyl-hydroquinone, diethyl ester of 3,5-di-t-butyl-4-hydroxybenzylphosphoric acid and the like.

These antioxidants can be used either alone or as a combination of two or more of them.

The amount of the antioxidant blended is preferably from 0.1 to 10 parts by weight, and particularly preferably from 0.2 to 5 parts by weight, based on 100 parts by weight of the total of components (A) and (B).

The lubricants usable in the present invention include a paraffinic and hydrocarbon resins generally used for imparting extrusion stability, a metal soap, a fatty acid, a fatty acid amide, a fatty acid ester, an aliphatic metal salt, silicone oil and the like.

The coloring agent is appropriately selected from inorganic pigments and organic pigments to use.

Although the compounding ratio of the above other additives (G) is not particularly limited, each is from 0 to 20 parts by weight, and preferably from 1 to 15 parts by weight, based on 100 parts by weight of the total amount of the above-mentioned components (A) and (B).

The total amount of the above (E), (F) and (G) is from 0 to 600 parts by weight, and preferably from 3 to 500 parts by weight, based on 100 parts by weight of the total amount of components (A) and (B).

There is no particular limitation on a method for mixing the above-mentioned components (A), (B), (C) and (D) of the present invention and the other components to prepare the thermoplastic polymer composition. It only requires a mixing method using a kneading apparatus used for general rubber compounding, such as a Banbury type mixer, a pressure kneader or an open roll, and it is preferred that the mixing is carried out at a temperature ranging from 70 to 130°C.

<Crosslinking Foam Molding>

The crosslinking foam molding of the present invention is a production method of a crosslinked foam-molded article characterized in that the crosslinked foam-molded article comprises the above-mentioned crosslinked thermoplastic elastomer and has the same shape after foam molding as the shape of a mold cavity.

That is to say, the present invention is a production method of a crosslinked foam-molded article characterized in that it is a method for performing crosslinking foam molding of a thermoplastic elastomer composition using (a) a split mold comprising a lower mold, one or more intermediate molds and an upper mold, or (b) a slide mold comprising a lower mold and an upper mold, wherein the upper mold is slidable, and comprises

(1) a pre-step of placing a predetermined amount of the thermoplastic elastomer composition that is a material for crosslinking foaming in a first cavity space (V1) formed between the lower mold and the intermediate mold in the case of the split mold (a), or in a first cavity space (V1) formed between the lower mold and the upper mold slid downward in the case of the slide mold (b),

(2) a first step (premolding) of foam molding the above-mentioned thermoplastic elastomer composition in the above-mentioned first cavity space (V1) under heating and pressure to form a skin layer around a premolded article obtained, and

(3) a second step (main molding) of further crosslinking and foaming the above-mentioned premolded article under heating and pressure in a second cavity space (V2) formed between the lower mold and the upper mold by removing the intermediate mold and more enlarged than the first cavity space (V1) (a) in the case of the split mold, or in a second cavity space (V2) formed by sliding the upper mold upward and enlarged than the first cavity space (V1) (b) in the case of the slide mold, wherein the amount of the above-mentioned thermoplastic elastomer composition placed is adjusted to a 0.7 to 1.2-fold excess in relation to the first cavity space (V1) as a condition of the first step, and further, the ratio V2/V1 of the second cavity space (V2) to the first cavity space (V1) is adjusted to 1.1 to 20.

Further, preferably, conditions of the first step which is preliminary crosslinking foaming step comprise crosslinking foaming temperature: 120°C to 170°C, crosslinking foaming pressure: 20 to 200 $kg/cm^2$ and crosslinking foaming time: 1 to 30 minutes, and conditions of the second step which is main crosslinking foaming step comprise crosslinking foaming temperature: 120°C to 200°C that is equal to or higher than that of the first step, preferably 130°C to 200°C, crosslinking foaming pressure: 10 to 70 $kg/cm^2$ that is lower than that of the first step and crosslinking foaming time: 3 to 30 minutes.

Preferred embodiments of the crosslinking foam molding of the present invention include a method characterized in that the mold comprises the lower mold, the one or more intermediate molds (insert plates) and the upper mold, the intermediate molds are removed after the first step (premolding), and the second step (main molding) is performed, as described above. Specifically, as the mold, there is used a split mold having a three or more-piece mold comprising at least an upper mold, an intermediate mold and a lower mold. The shape of the cavity formed herein by the lower mold and the intermediate mold is the same as or similar to the shape of the cavity between the lower mold and the upper mold except for the thickness. A greenware comprising the composition of the present invention is placed between the lower mold and the intermediate mold in a 0.7- to 1.2-fold excess in relation to the volume of the cavity formed between the lower mold and the intermediate mold (the pre-step), and premolding (the premolding makes it possible to form a fine skin and to perform molding for a short period of time, because the molded article early comes into contact with the mold, resulting in easy thermal conductivity) is performed at 120 to 170˚C and a pressure of 20 to 200 kg/cm$^2$ for 1 to 30 minutes (the first step). Here, at the time of the premolding, the cavity between the intermediate mold and the lower mold is adjusted to 1/1.1 to 1/20 of the volume of the cavity between the upper mold and the lower mold in the main molding. Thereafter, the intermediate mold is removed, and crosslinking foam molding is performed in the cavity between the lower mold and the upper mold at a temperature of 120 to 200˚C that is equal to or higher than that of the first step, preferably 130 to 200˚C and a pressure of 10 to 70 kg/cm$^2$ that is lower than that of the first step for a time of 3 to 30 minutes (the second step).

With respect to the present invention, using the above thermoplastic elastomer without using the intermediate mold, foam molding is also performed at a breath by a short shot method to obtain one having the same shape after foam molding as the shape of the mold cavity. However, in the case of a foam having a specific gravity of 0.6 or less, no proper skin is formed, mold design transfer properties are poor, and the molding time also becomes long, which causes unsatisfactory results in some cases.

In a specific example of the crosslinking foam molding insert plate method of the present invention, in order to produce a primary molded article, a greenware (shoe sole member) 12 is first stamped out from a plate material 11 composed of the thermoplastic elastomer composition of the present invention, as shown in Fig. 1.

The weight of the greenware 12 as used herein is adjusted to a 0.7- to 1.2-fold excess of the volume of the cavity formed by the lower mold and the intermediate mold, and it is preferred that the stamped-out shape is near to the shape of the mold.

Then, as the pre-step, the greenware 12 as the shoe sole member is inserted in a lower mold 23 of a split mold 20comprising an upper mold 21, an intermediate mold 22 and the lower mold 23 provided with unevenness 23a on upper surface thereof in order to form an unevenness pattern on a shoe sole face for anti slip and design, as shown in Fig. 2. Then, as the first step (premolding), the intermediate mold 22 and the upper mold 21 are pushed into the lower mold 23 from above as shown in Fig. 2, and premolding is performed between the lower mold and the intermediate mold at 120 to 170˚C, preferably 130 to 160 ˚C, for 1 to 30 minutes, preferably 3 to 20 minutes. By this premolding, the greenware 12 is subjected to crosslinking foam molding in a restricted space and receive the required amount of heat from the mold by propagation, proper crosslinking foaming proceeds, a skin layer followable to the shape is formed, and efficient foam molding proceeds because outgassing from the skin layer is difficult to occur at the time of crosslinking foam molding. Accordingly, the resulting foam-molded article becomes fine, and design transfer becomes elaborate.

Here, in the case of premolding, the cavity between the intermediate mold 22 and the lower mold 23 is from 1/1.1 to 1/20 of the volume of the cavity between the upper mold 21 and the lower mold 23 in the crosslinking foam molding. Less than 1/1.1 unfavorably results in failure to obtain a light-weight foam, whereas exceeding 1/20 unfavorably results in easy outgassing from the skin layer to impair the appearance of the molded article.

Further, when the molding temperature of premolding is less than 120˚C, proper crosslinking foaming can not be performed. This is therefore unfavorable. On the other hand, exceeding 170˚C unfavorably results in the occurrence of an over crosslinking phenomenon to damage the skin layer.

Furthermore, when the time of premolding is less than 1 minute, crosslinking foaming is insufficient, and the molded article is unfavorably deformed when the intermediate mold is removed. On the other hand, exceeding 30 minutes unfavorably results in the occurrence of an over crosslinking phenomenon to damage the skin layer. The weight of the greenware 12 is a 0.7- to 1.2-fold excess in relation to the volume of the cavity formed by the lower mold and the intermediate mold. Less than a 0.7-fold excess unfavorably results in failure to obtain the good skin layer to impair the appearance of the foam-molded article. On the other hand, exceeding a 1.2-fold excess unfavorably results in the tendency to generate many burrs (a phenomenon in which the greenware overflows from the mold) to contaminate the mold.

Then, in the second step (main molding), the intermediate mold 22 shown in Fig. 3 is removed, and the upper mold 21 is inserted into the lower mold 23. Crosslinking foam molding is performed in the cavity between the lower mold 23 and the upper mold 21 at 120 to 200˚C, preferably 130 to 200˚C, for 3 to 30 minutes, preferably 5 to 18 minutes. By this main molding, the foam-molded article premolded from the greenware 12 is finally crosslinked and foamed under gentle, mild and ideal crosslinking foaming conditions without passing through rapid crosslinking foaming conditions, so that the crosslinking valance between a surface layer and an inner layer of the crosslinked foam is homogenized, and

cells (air bubbles) of the foam also become homogeneous in shape. Thus, a foam-molded article having the same volume as the volume of the cavity between the lower mold 23 and the upper mold 21 and having the fine appearance is formed to obtain a shoe sole 12'.

Here, when the molding temperature of the main molding is less than 120˚C, proper crosslinking foaming can not be performed. This is therefore unfavorable. On the other hand, exceeding 200˚C unfavorably results in the occurrence of an over crosslinking phenomenon to damage the skin layer.

Further, when the time of the main molding is less than 3 minutes, crosslinking foaming is insufficient, and the foam-molded article is deformed when the molded article is discharged from the mold. This is therefore unfavorable. On the other hand, exceeding 30 minutes unfavorably results in the occurrence of an over crosslinking phenomenon to damage the skin layer.

According to the above premolding and main molding, the foam-molded article is finally crosslinked and foamed under gentle, mild and ideal crosslinking foaming conditions without passing through rapid crosslinking foaming conditions, so that the crosslinking valance between a surface layer and an inner layer of the crosslinked foam is homogenized, and cells (air bubbles) of the foam also become homogeneous in shape. Thus, there is achieved the effect of forming a foam-molded article having the same volume as the volume of the cavity between the lower mold and the upper mold and having the fine appearance. Further, there is no variation in size, and a process such as cutting for size adjustment becomes unnecessary, so that the present invention has the economical advantage of eliminating a loss of the crosslinked foam-molded article.

Furthermore, according to the premolding and main molding of the present invention, compressive strain is significantly improved in terms of physical properties, and mold designing becomes easy in terms of design, because a design is reproduced as a mold design, so that the present invention has the advantage of being able to directly confirm the article having a desired shape. Moreover, when an insert member is previously attached to the lower mold, there is achieved the effect that reinforcement and decoration are possible without deformation.

On the other hand, as another mode of crosslinking foam-molding of the present invention, molding can also be performed using the slide mold.

In the mold, knock pins are each provided with a spring of steel or the like, and movement to any height is carried out by force of the spring (the volume of a cavity is enlarged). In this case, a first crosslinked foam-molded article is placed in a 0.7- to 1.2-fold excess in relation to the volume of the cavity formed by the mold (the pre-step), and premolding (the premolding makes it possible to form a fine skin and to perform molding for a short period of time, because the molded article early comes into contact with the mold, resulting in easy thermal conductivity) is performed at 120 to 170 ˚C and a pressure of 20 to 200 kg/cm$^2$ for 1 to 30 minutes (the first step).

Thereafter, the relation between repulsive force of the spring of steel or the like (mold opening force) and crosslinking foam molding pressure is adjusted so as to give any expansion ratio to secure the specified volume of the mold cavity, and then, crosslinking foam molding is performed at 120 to 200˚C that is equal to or higher than that of the first step, preferably 130 to 200˚C and a pressure of 10 to 70 kg/cm$^2$ that is lower than that of the first step for 3 to 30 minutes (the second step). When the upper mold is slid with the spring of steel or the like, a mold is used in which airtightness is warranted to such a degree that the foam does not leak outside.

As a specific example using the above slide mold, there is used a system in which the volume of the cavity is slide expanded as shown in Figs. 4(a) and 4(b). For sliding, the spring made of steel is used in a boundary between the upper mold and the lower mold, and an operation can be arbitrarily performed in relation to the opening of a compression molding machine. That is to say, as shown in Fig. 4(a), the greenware 12 is placed in the lower mold 42 of the slide mold 40 comprising the upper mold 41 slid downward and the lower mold 42 (the pre-step). After premolding (the first step), the upper mold 41 is slid upward with the spring 44 as shown in Fig. 4(b), and crosslinking foam molding is performed to obtain a foamed shoe sole 12'. In Fig. 4, the reference numeral 43 is a nock pin.

In the above molding methods, when crosslinking foaming is performed, the mold portion is heated and pressurized at the above-mentioned temperature range for the above-mentioned specified period of time, whereby a foaming agent is decomposed in the mold having a specified shape to generate a gas, and the composition is crosslinked. Thus, crosslinking foaming proceeds. The pressure contact force of a crosslinking foam molding machine requires a pressure higher than the expansion pressure of the gas generated by the decomposition of the foaming agent, and usually, the specific pressure applied to a cavity of the mold is preferably 7 MPa or more. When the specific pressure is low, the bubble size of the molded article increases, and burrs are produced on the foam, resulting in poor appearance. After heating and pressurization for a specified period of time, the mold is opened, thereby obtaining the crosslinked foam as a product.

In the case of the foam-molded article (foamed shoe sole), the density thereof is usually from 0.1 to 1.1 Mg/m$^3$, and preferably from 0.1 to 0.9 Mg/m$^3$.

In the above crosslinking foam molding of the present invention, it is preferred that the pressure is reduced while a specific amount of the composition of the present invention as a material for crosslinking foam molding is placed in the inside of the mold and pressurized. This pressure reduction technique is one in which an external pressure reducing

device is activated in the timing of closing the mold to depressurize and deaerate a cavity pressure reduction site incorporated into the mold, and has the advantage that the percent defective is significantly improved, because a gas in the material and a gas existing in a boundary between the material and the mold can be easily discharged (deaerated) from the mold at the time of crosslinking foam molding under reduced pressure, so that troubles (air pocket and blister) of the molded article caused by the contained gases can be excluded. As a specific means of this pressure reduction, an air hole is provided in the periphery of the mold cavity, and the air hole is connected to a vacuum pump to reduce the pressure, thereby achieving the object. At this time, as a method for enhancing the pressure reduction efficiency, there is frequently used a technique for enhancing airtightness by providing an O-ring on the surface opposite to a surface to which pressure reduction is applied.
For pressure reduction, it is preferred that the pressure is reduced to 760 mmHg. However, the intended deaeration is achieved at 500 mmHg or more. The deaeration time is from the time when crosslinking foam molding is initiated to 30 seconds or less after crosslinking foam molding, and the total deaeration time is preferably from 32 seconds to 60 seconds. Less than 32 seconds results in insufficient deaeration, whereas exceeding 60 seconds unfavorably results in the application of a load to a pressure reduction line.
The molded articles (crosslinked foams) thus produced are useful as shoe sole materials for the overall footwear specifically such as men's shoes, ladies' shoes, casual shoes, running shoes, jogging shoes, tracking shoes, various athletic shoes, mountaineering boots, dress shoes, golf shoes, house shoes, slippers and beach shoes. Further, the compositions and molded articles of the present invention can be used in various molded articles such as automobile parts, building material parts, industrial parts, toys-miscellaneous goods and sporting-health goods, various sheets and films, other industrial goods, buffer materials, packaging materials and the like. Furthermore, the foam-molded articles (including crosslinked matter) of the present invention are excellent in dimensional accuracy and also excellent in durability and cushioning properties, so that they can also be applied to thermoformed sponges. The thermoformed sponge as used herein is one prepared by previously cutting the foam to a desired shape, heating and pressurizing it in a mold heated at a temperature equal to or higher than the melting point of components (A) and (B), preferably at 100 to 150 ˚C, to form a firm melt coating on an outer surface of the foam, then, cooling the mold, and taking out the foam.

Examples

The present invention will be illustrated in greater detail with reference to the following examples, but the invention should not be construed as being limited by these examples.

Parts and percentages are by weight basis, unless otherwise indicated.
Further, various measurements in examples are based on the following methods.

Melting Point (Tm):

Determined based on ASTM D3418 (DSC method).

1,4-Bond Content:

Determined by the infrared absorption spectrum method (Morero method).

Degree of Crystallinity of 1,2-Polybutadine:

Converted from the density measured by the underwater substitution method, taking the density of 1,2-polybutadiene having a degree of crystallinity of 0% as 0. 889 g/cm$^3$ and the density of 1,2-polybutadiene having a degree of crystallinity of 100% as 0.963 g/cm$^3$.

Mooney Viscosity:

Measured based on JIS K 6300-1.
Melt Flow Rate (MFR):

Measured based on ASTM D1238 (conditions: 190˚C, load: 2.16 kg).
Molding Appearance:

O: A foam has a proper skin layer, and a mold design is faithfully transferred and reproduced.
×: A skin layer is unstable, many traces of degassing are observed, a mold design is unclear or deformed, or the

size of a design is different from that of a mold, so that it is unfavorable.

Molding Shape

O: The same as the volume of a mold cavity and the same in shape.
×: Different from the volume of a mold cavity, or different in shape.

Thickness Accuracy

O: ± less than 0.5%
×: ± 0.50 or more

Molded Article Loss

O: The molding appearance is good (○), the molding shape is good (○), the thickness accuracy is good (○), and a foam has no defective phenomena such as a crack and a scratch.
×: The molding appearance is poor (×), the molding shape is poor (×), the thickness accuracy is poor (×), and a foam has a deficiency in either a crack or a scratch.

Another Insert Member

O: Even when an insert member or the like is set in a mold, no deformation occurs in shape, and the function of a molded article is improved.
×: When an insert member is set in a mold, deformation occurs in shape

Specific Gravity

Measured by the buoyancy method.

Judgment

O: 0.3-0.6
×: Less than 0.3 or exceeding 0.6

Hardness:

Based on SR1S0101. Measured with ASKER Type C (sponge hardness tester).

Judgment

O: 50-70 degrees
×: Less than 50 degrees (too soft, resulting in deformation by a small load) or exceeding 70 degrees (too hard, resulting in lack of cushioning properties).

Tensile Strength

Measured based on JIS K 6251 (using a No.2 dumbbell).

Judgment

O: 2.0 MPa or more
×: Less than 2.0 MPa

Tensile Elongation

Measured based on JIS K 6251 (using a No.2 dumbbell).

Judgment

O: 300% or more
×: Less than 300%

Tearing Strength

O: 10 kN/m or more
×: Less than 10 kN/m

Compressive Permanent Set

Measured based on ISO 815 (50˚C, 25% compression, 22 hours, after 24 hours at room temperature).

Judgment

O: Less than 50%
×: 50% or more

Repulsive Elasticity

O: 50% or more
×: Less than 50%

Example 1

A composition comprising 60 parts of RB820 (manufactured by JSR Corporation, syndiotactic 1,2-polybutadiene), 40 parts of IR2200 (manufactured by JSR Corporation, cis-1,4-polyisoprene), 5 parts of zinc oxide #1 (manufactured by Sakai Chemical Industry Co. Ltd.), 1 part of stearic acid (manufactured by Asahi Denka Kogyo K.K.), 4 parts of titanium oxide (manufactured by Sakai Chemical Industry Co. Ltd.), 1 part of Irganox 1076 (manufactured by Ciba Specialty Chemicals), 5 parts of paraffin oil (manufactured by Idemitsu Kosan Co., Ltd.), 10 parts of calcium carbonate light (manufactured by Shiraishi Kogyo Kaisha, Ltd.) and 2 parts of silicone oil (manufactured by GE Toshiba Silicone Co., Ltd.) shown in Table 1 was kneaded at 90˚C for 10 minutes using a 3L pressure kneader, and discharged at 120˚C. Then, 2 parts of a foaming agent, FZ-80 (manufactured by Eiwa Chemical Ind. Co., Ltd.), 1 part of a vulcanization accelerator, DM (manufactured by Sanshin Chemical Industry Co., Ltd.), 1 part of a vulcanization accelerator, M (manufactured by Sanshin Chemical Industry Co., Ltd.), 1 part of sulfur (manufactured by Tsurumi Chemical Industry Co., Ltd.) and 1.5 parts of dicumyl peroxide (DCP), a product with a purity of 40% (manufactured by Nippon Oil and Fats Co., Ltd.), were kneaded therewith under 95 to 100˚C using a 10-inch roll, and the kneaded material (greenware) was formed into a sheet having a thickness of about 5 mm. As for crosslinking foam molding, using a slide mold and a three-piece split mold comprising an upper mold, an intermediate mold and a lower mold (the shape of a cavity between the lower mold and the intermediate mold was the same as the shape of a cavity between the lower mold and the upper mold, with the exception that they were different from each other in thickness), the greenware comprising the composition of the present invention was placed in a first cavity space (V1) in a 0.95- to 1.1-fold excess in relation to the volume of the cavity (cavity thickness: 3 to 5 mm), and premolding was performed at 145 to 150˚C for 5 minutes. Thereafter, in a second cavity space (V2) enlarged (cavity thickness: 10 mm), crosslinking foam molding (main molding) was performed at 160 to 170˚C for 10 minutes. The results of evaluation are shown in Table 1.

Examples 2 to 6

Using compositions of compounding formulations shown in Table 1, kneading processing and crosslinking foam molding were performed in the same manner as in Example 1. The results of evaluation are shown in Table 1. As apparent from Table 1, it was revealed that excellent transferred foam-molded articles were obtained in Examples 1 to 6, which had the same shape and volume as the cavities of the molds, generated no loss, because they were excellent in molding appearance-thickness accuracy, so that no after processing of the molded articles for the purpose of size adjustment was required, and generated no changes in shape in relation to insert members to provide performance excellent in functionality because of no occurrence of foaming outside the molds.

Comparative Example 1

In Comparative Example 1, the same composition as in Example 1 was kneaded, and crosslinking foaming was performed in the same amount of the greenware charged under optimum crosslinking conditions, with the exception that a mold is two-piece split, which is different from Example 1, and that premolding of the present invention was not performed. As a result, as apparent from the molding judgments, molding appearance, molding shape and thickness accuracy are poor, and there is also a problem in the physical properties with respect to tensile strength. This is therefore unfavorable.

In Comparative Example 2, the same composition as in Example 1 was kneaded, and crosslinking foaming was performed under optimum crosslinking conditions, with the exception that the amount of the greenware charged was outside the range of the present invention. As a result, as apparent from the molding judgments, molding appearance, molding shape and thickness accuracy are poor, and there is also a problem in the physical properties with respect to hardness and tensile strength. This is therefore unfavorable.

Comparative Examples 3

In Comparative Example 3, the same composition as in Example 1 was kneaded, and crosslinking foaming was performed in the same amount of the greenware charged under optimum crosslinking conditions, with the exception that the ratio of the mold cavity volume in premolding to that in crosslinking foam molding (main molding) (thickness ratio) was outside the range of the present invention (consequentially, the volume necessary for crosslinking foam molding was not attained). As a result, as apparent from the molding judgments, molding appearance, molding shape and thickness accuracy are poor, and deformation occurs between an insert member and the mold. This is therefore unfavorable. Moreover, there is also unfavorably a problem in the physical properties with respect to tensile strength and tensile elongation.

Comparative Example 4

In Comparative Example 4, the greenware for molding having the same compounding composition as in Example 1 was excessively filled in a crosslinking foam molding mold, and crosslinking foaming was performed under optimum crosslinking conditions, with the exception that the mold is different from that in Example 1 and that premolding was not performed. As a result, foaming outside the mold occurs, and as apparent from the molding judgments, molding appearance, molding shape and thickness accuracy are poor. Further, a loss occurs in take size, and deformation also occurs between an insert member and the mold. This is therefore unfavorable. Moreover, there is also unfavorably a problem in the physical properties with respect to tensile strength and tensile elongation.

As apparent from the above, it is revealed that Examples of the present invention is significantly superior to Comparative Examples outside the range of the present invention.

[Table 1]

| | Example | | | | | | Comparative Example | | | |
|---|---|---|---|---|---|---|---|---|---|---|
| | 1 | 2 | 3 | 4 | 5 | 6 | 1 | 2 | 3 | 4 |
| Compounding | | | | | | | | | | |
| RB820 *1 | 60.0 | | | | 60.0 | | 60.0 | 60.0 | 60.0 | 60.0 |
| RB830 *2 | | 60.0 | 60.0 | 60.0 | | | | | | |
| IR2200 *3 | 40.0 | 40.0 | 40.0 | 40.0 | 40.0 | 30.0 | 40.0 | 40.0 | 40.0 | 40.0 |
| EVA Ultracen #633 *4 | | | | | | 70.0 | | | | |
| Zinc Oxide #1 *5 | 5.0 | 5.0 | 5.0 | 5.0 | 5.0 | 5.0 | 5.0 | 5.0 | 5.0 | 5.0 |
| Stearic Acid *6 | 1.0 | 1.0 | 1.0 | 1.0 | 1.0 | 1.0 | 1.0 | 1.0 | 1.0 | 1.0 |
| Titanium Oxide *7 | 4.0 | 4.0 | 4.0 | 4.0 | 4.0 | 4.0 | 4.0 | 4.0 | 4.0 | 4.0 |
| Antiaging Agent Irganox 1076 *8 | 1.0 | 1.0 | 1.0 | 1.0 | 1.0 | 1.0 | 1.0 | 1.0 | 1.0 | 1.0 |
| Paraffin Oil *9 | 5.0 | 5.0 | 5.0 | 5.0 | 5.0 | 5.0 | 5.0 | 5.0 | 5.0 | 5.0 |
| Calcium Carbonate Light *10 | 10.0 | 10.0 | 10.0 | 10.0 | | | 10.0 | 10.0 | 10.0 | 10.0 |
| Silica $VN_3$ *11 | | | | | 10.0 | 10.0 | | | | |
| Silicone Oil *12 | 2.0 | 2.0 | 2.0 | 2.0 | 2.0 | 2.0 | 2.0 | 2.0 | 2.0 | 2.0 |
| Foaming Agent FZ-80 *13 | 2.0 | 2.2 | 2.4 | 2.0 | 2.0 | 2.0 | 2.0 | 2.0 | 2.0 | 2.0 |
| Vulcanization Accelerator DM *14 | 1.0 | 1.0 | 0.8 | | 1.0 | | 1.0 | 1.0 | 1.0 | 1.0 |
| Vulcanization Accelerator M *15 | 1.0 | 1.0 | 0.5 | | 1.0 | | 1.0 | 1.0 | 1.0 | 1.0 |
| Vulcanization Accelerator TS *16 | | | | | 0.9 | | | | | |
| Sulfur *17 | 1.0 | 1.0 | 1.0 | | 1.0 | | 1.0 | 1.0 | 1.0 | 1.0 |
| DCP, a product with a purity of 40% * 18 | 1.5 | 1.0 | 0.5 | 0.25 | | 3.0 | 1.5 | 1.5 | 1.5 | 1.5 |
| Total | 134.5 | 134.2 | 133.2 | 130.3 | 133.9 | 133.0 | 134.5 | 134.5 | 134.5 | 134.5 |

[Table 1 (continued)]

| | Example | | | | | |
|---|---|---|---|---|---|---|
| | 1 | 2 | 3 | 4 | 5 | 6 |
| [Molding] | | | | | | |
| Mold | 3-piece | 3-piece | 3-piece | 3-piece | 3-piece | Slide core |
| Fluorine Treatment to Surface of Mold Cavity | Applied | Applied | Applied | Applied | Applied | Applied |
| Thickness of Cavity between Lower Mold and Intermediate Mold (mm) | 5 | 4 | 3 | 4 | 5 | 5 |
| Amount of Greenware Charged (Fold: Fullpack Comparison) | 1.10 | 1.00 | 0.95 | 1.00 | 1 | 1.10 |
| Premolding, Tem. (°C)× Time (min) | 150×5 | 145×5 | 145×5 | 145×5 | 150×5 | 150×5 |
| Thickness of Cavity between Lower Mold and Upper Mold (mm) | 10 | 10 | 10 | 10 | 10 | 10 |
| Compression Molding Tem. (°C)×Time (min) | 160×10 | 165×10 | 170×10 | 170×10 | 160×10 | 160×10 |
| Molding Appearance (Judgment: Mold Design Transfer etc.) | Good (○) | Good (○) | Good (○) | Good (○) | Good (○) | Good (○) |
| Molding Shape (Judgment) | Good (○) | Good (○) | Good (○) | Good (○) | Good (○) | Good (○) |
| Thickness Accuracy (Judgment) | Good (○) | Good (○) | Good (○) | Good (○) | Good (○) | Good (○) |
| Loss of Molded Article (Judgment) | Not present (○) | Not present (○) | Not present (○) | Not present (○) | Not present (○) | Not present (○) |
| Another Insert Member (Judgment) | Possible (○) | Possible (○) | Possible (○) | Possible (○) | Possible (○) | Possible (○) |

[Table 1 (continued)]

| | Comparative Example | | | |
|---|---|---|---|---|
| | 1 | 2 | 3 | 4 |
| [Molding] | | | | |
| Mold | ***2-piece*** | 3-piece | 3-piece | 2-piece |
| Fluorine Treatment to Surface of Mold Cavity | Applied | Applied | Applied | Not applied |
| Thickness of Cavity between Lower Mold and Intermediate Mold (mm) | 5 | 5 | ***1*** | - |
| Amount of Greenware Charged (Fold: Fullpack Comparison) | 1.10 | ***0.50*** | 1.10 | 1.1 |
| Premolding, Tem. (°C)× Time (min) | 150×5 | 150×5 | 150×2 | ***No premolding*** |
| Thickness of Cavity between Lower Mold and Upper Mold (mm) | 10 | 10 | ***30*** | 10 |
| Compression Molding Tem. (°C)×Time (min) | 160×20 | 165×10 | 160×30 | 160×14 |
| Molding Appearance (Judgment: Mold Design Transfer etc.) | Poor (×) | Poor (×) | Poor (×) | Poor (×) |
| Molding Shape (Judgment) | Poor (×) | Poor (×) | Poor (×) | Poor (×) |
| Thickness Accuracy (Judgment) | Poor (×) | Poor (×) | Poor (×) | Poor (×) |
| Loss of Molded Article (Judgment) | Not present (○) | Not present (○) | Not present (○) | Present (×) |
| Another Insert Member (Judgment) | Possible (○) | Possible (○) | Impossible (×) | Impossible (×) |

[Table 1 (continued)]

| | Example | | | | | |
|---|---|---|---|---|---|---|
| | 1 | 2 | 3 | 4 | 5 | 6 |
| [Physical Properties] | | | | | | |
| Specific Gravity (Judgment) | 0.5(○) | 0.4(○) | 0.35(○) | 0.4(○) | 0.5(○) | 0.5(○) |
| Hardness Type C (degree) (Judgment) | 62(○) | 65(○) | 58(○) | 63(○) | 64(○) | 68(○) |
| Tensile Strength (MPa) (Judgment) | 2.9(○) | 2.8(○) | 2.4(○) | 2.7(○) | 2.8(○) | 3.0(○) |
| Tensile Elongation (%) (Judgment) | 600(○) | 550(○) | 500(○) | 600(○) | 650(○) | 650(○) |
| Tearing Strength (kN·m) (Judgment) | 18(○) | 16(○) | 13(○) | 16(○) | 17(○) | 22(○) |
| Compressive Permanent Set (%) (Judgment) | 32(○) | 38(○) | 43(○) | 40(○) | 34(○) | 43(○) |
| Repulsive Elasticity (%) (Judgment) | 60(○) | 65(○) | 68(○) | 66(○) | 62(○) | 60(○) |

[Table 1 (continued)]

| | Comparative Example | | | |
|---|---|---|---|---|
| | 1 | 2 | 3 | 4 |
| [Physical Properties] | | | | |
| Specific Gravity (Judgment) | 0.5(○) | 0.35(○) | 0.5(○) | 0.6(○) |
| Hardness Type C (degree) (Judgment) | 60(○) | 42(×) | 60(○) | 66(○) |
| Tensile Strength (MPa) (Judgment) | 1.9(×) | 1.7(×) | 1.8(×) | 1.8(×) |
| Tensile Elongation (%) (Judgment) | 400(○) | 300(○) | 250(×) | 280(×) |
| Tearing Strength (kN·m) (Judgment) | 13(○) | 10(○) | 14(○) | 17(○) |
| Compressive Permanent Set (%) (Judgment) | 28(○) | 26(○) | 33(○) | 42(○) |
| Repulsive Elasticity (%) (Judgment) | 65(○) | 68(○) | 60(○) | 58(○) |

Note) In Comparative Examples 1 to 4, one outside the range of the present invention is represented by bold italics.

The following were used as the various compounding agents in Examples.

*1) Manufactured by JSR Corporation, RB820 (syndiotactic 1,2-polybutadiene), melting point=95˚C, $\eta_{sp}/c$=0.8, the degree of crystallinity =24%
*2) Manufactured by JSR Corporation, RB830 (syndiotactic 1, 2-polybutadiene), melting point=105˚C, $\eta_{sp}/c$=0.8, the degree of crystallinity =28%
*3) Manufactured by JSR Corporation, IR2200 (cis-1,4-polyisoprene), cis-1,4-bond content: 98%, Mooney viscosity $ML_{1+4}$ (100˚C) : 82
*4) EVA Ultracen #633: VAc: 20%, MFR: 20 (190˚C, load:2160 g), manufactured by Tosoh Corporation
*5) Zinc oxide #1: manufactured by Sakai Chemical Industry Co. Ltd., Zinc Oxide No. 1
*6) Stearic acid: manufactured by Asahi Denka Kogyo K.K., melting point: 71˚C
*7) Titanium Oxide: manufactured by Sakai Chemical Industry Co. Ltd., anatase type
*8) Irganox 1076: manufactured by Ciba Specialty Chemicals, phenolic antiaging agent
*9) Paraffin Oil: manufactured by Idemitsu Kosan Co., Ltd., Diana Process Oil PW90 was used.
*10) Calcium carbonate light: manufactured by Shiraishi Kogyo Kaisha, Ltd., Silver W
*11) Silica $VN_3$: manufactured by Tosoh Silica Corporation
*12) Silicone oil: manufactured by GE Toshiba Silicone Co., Ltd., TSF451
*13) Foaming agent FZ-80: manufactured by Eiwa Chemical Ind. Co., Ltd., azo-based foaming agent
*14) Vulcanization accelerator DM: manufactured by Sanshin Chemical Industry Co., Ltd., thiazole-based accelerator (MBTS)
*15) Vulcanization accelerator M: manufactured by Sanshin Chemical Industry Co., Ltd., thiazole-based accelerator (MBT)
*16) Vulcanization accelerator TS: manufactured by Sanshin Chemical Industry Co., Ltd., thiuram-based accelerator (TMTM)
*17) Sulfur: manufactured by Tsurumi Chemical Industry Co., Ltd., sulfur powder, mark Kinka
*18) DCP 40%: manufactured by Nippon Oil and Fats Co., Ltd., dicumyl peroxide, 40% product

Industrial Applicability

According to the present invention, there is obtained a foam-molded article such as a shoe sole, in which a molded sponge does not have variations in size, is excellent in thickness accuracy, has a moderate density and hardness, and is excellent in mold design transfer properties, because the employment of a specific mold and processing system provides the sponge having the same shape as the mold, an operation process is simple, because a molded article is not excessively cut, it is excellent in economical efficiency because of no occurrence of a loss, and it is rich in functionality, because it can comply with various designs (it is possible to use in combination with another member by insertion or the like). Further, in the thermoplastic elastomer composition of the present invention, specific 1, 2-polybutadiene (A) is used alone or in combination with diene-based rubber (B) or the like, and further, a crosslinking agent and a foaming agent are blended, so that it is possible to form a sponge having an arbitrary density by mainly adjusting compounding of the crosslinking agent and the foaming agent.
Consequently, in the composition used in the present invention, a system comprising 100% by weight of component (A) and a system comprising a blend of component (A) and thermoplastic elastomer (B) are useful for sports shoe soles such as running shoe soles, jogging shoe soles, golf shoe soles, baseball shoe soles, soccer shoe soles, mountaineering boot soles, heel lifts, toys, writing materials, building materials, convenience goods, foam molding applications, sheet molding applications, injection shoe soles (foamed and non-foamed), unit soles, high-heeled mules, casual shoe soles, men's and ladies' shoe soles, protectors, automobile parts, industrial parts, building parts, electric parts applications and the like.
Further, the molded articles (crosslinked foams) produced from the compositions of the present invention are useful as shoe sole materials for the overall footwear specifically such as men's shoes, ladies' shoes, casual shoes, running shoes, jogging shoes, tracking shoes, various athletic shoes, mountaineering boots, dress shoes, golf shoes, house shoes, slippers and beach shoes.
Furthermore, the compositions and molded articles (crosslinked foams) of the present invention can be used in various formed articles such as automobile parts, building material parts, industrial parts, toys/miscellaneous goods and sporting and health goods, various sheets and films, other industrial goods, buffer materials, packaging materials and the like.
In addition, the foam-molded articles (including crosslinked matter) of the present invention are excellent in dimensional accuracy and also excellent in durability and cushioning properties, so that they can also be applied to thermoformed sponges.

## Claims

1. A method for producing a crosslinked foam-molded article **characterized in that** it is a method for performing crosslinking foam molding of a thermoplastic elastomer composition using (a) a split mold comprising a lower mold, one or more intermediate molds and an upper mold, or (b) a slide mold comprising a lower mold and an upper mold, wherein the upper mold is slidable, and comprises

   (1) a pre-step of placing a predetermined amount of the thermoplastic elastomer composition that is a material for crosslinking foaming in a first cavity space (V1) formed between the lower mold and the intermediate mold in the case of the split mold (a), or in a first cavity space (V1) formed between the lower mold and the upper mold slid downward in the case of the slide mold (b),
   (2) a first step of foam molding the thermoplastic elastomer composition in the first cavity space (V1) under heating and pressure to form a skin layer around a premolded article obtained, and
   (3) a second step of further crosslinking and foaming the premolded article under heating and pressure in a second cavity space (V2) formed between the lower mold and the upper mold by removing the intermediate mold and more enlarged than the first cavity space (V1) (a) in the case of the split mold, or in a second cavity space (V2) formed by sliding the upper mold upward and more enlarged than the first cavity space (V1) (b) in the case of the slide mold, wherein the amount of the thermoplastic elastomer composition placed is adjusted to a 0.7 to 1.2-fold excess in relation to the first cavity space (V1) as a condition of the first step, and further, the ratio V2/V1 of the second cavity space (V2) to the first cavity space (V1) is adjusted to 1.1 to 20.

2. The method for producing a crosslinked foam-molded article according to claim 1, wherein the crosslinked foam-molded article has the same shape as the mold, and is molded by in-mold crosslinking molding.

3. The method for producing a crosslinked foam-molded article according to claim 1 or 2, wherein conditions of the first step comprise temperature: 120˚C to 170˚C, pressure: 20 to 200 $kg/cm^2$ and time: 1 to 30 minutes, and conditions of the second step comprise temperature: 120˚C to 200˚C that is equal to or higher than that of the first step, pressure: 10 to 70 $kg/cm^2$ that is lower than that of the first step and time: 3 to 30 minutes.

4. The method for producing a crosslinked foam-molded article according to any one of claims 1 to 3, wherein in the first step, the pressure is reduced during application of pressure from the time when the material for crosslinking foaming is placed in the inside of the mold.

5. The method for producing a crosslinked foam-molded article according to any one of claims 1 to 4, wherein the thermoplastic elastomer compositions comprises 0.5 to 30 parts by weight of (C) a foaming agent and 0.02 to 20 parts by weight of (D) a crosslinking agent, based on 100 parts by weight of the total of 10 to 100% by weight of (A) thermoplastic elastomer and 90 to 0% by weight of (B) another polymer component (provided that (A)+(B)=100% by weight).

6. The method for producing a crosslinked foam-molded article according to claim 5, wherein component (A) is at least one selected from the group consisting of syndiotactic 1,2-polybutadiene, an ethylene-vinyl acetate copolymer and a polyethylenic resin polymerized by a metallocene catalytic system.

7. A molded article obtained by the method for producing a crosslinked foam-molded article according to any one of claims 1 to 6.

8. The molded article according to claim 7, wherein the specific gravity is 0.5 or less.

9. The molded article according to claim 7 or 8, wherein the molded article is a shoe sole.

(Fig. 1)

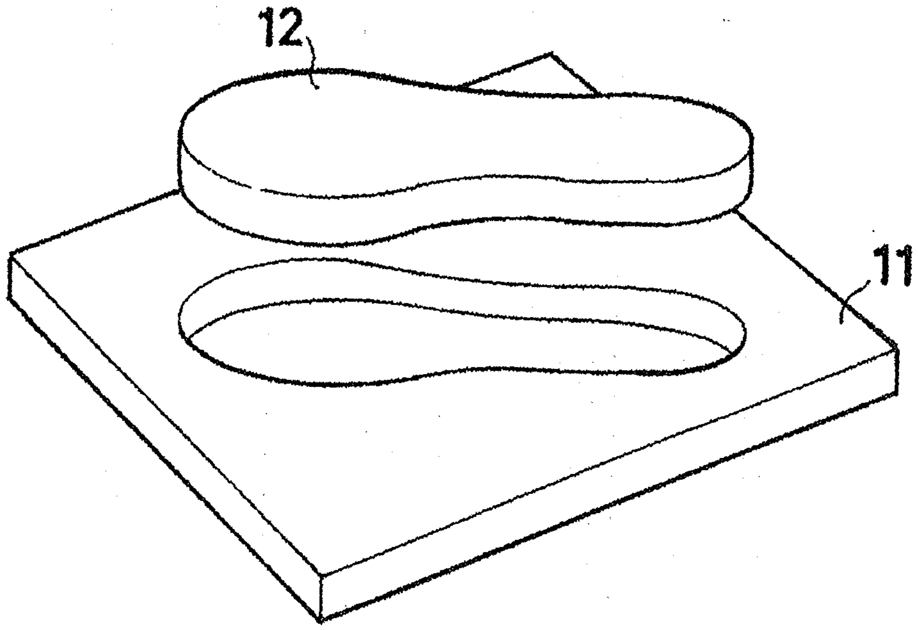


(Fig. 2)

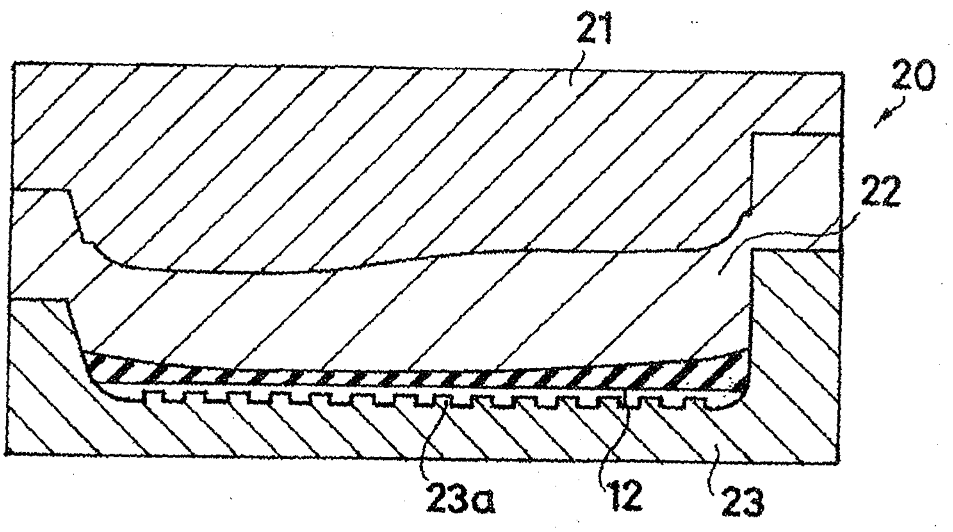

(Fig. 3)

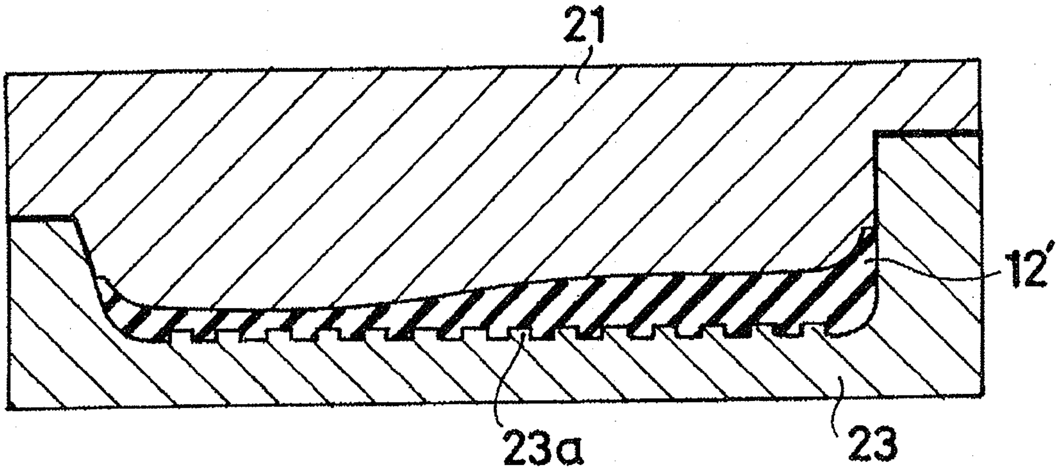


(Fig. 4)

(a)

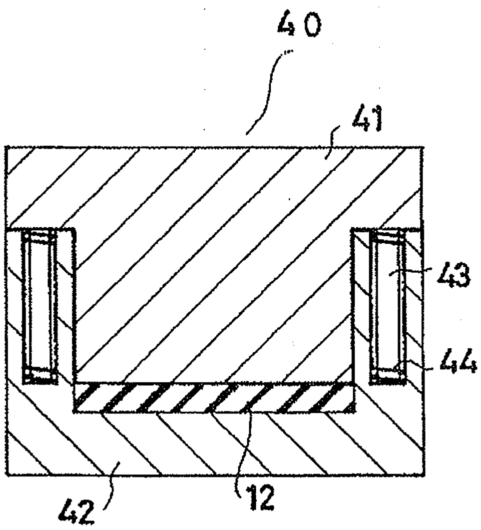


(b)

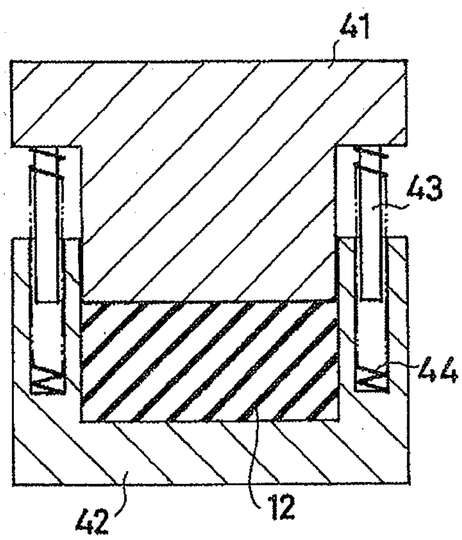

**INTERNATIONAL SEARCH REPORT**

International application No.
PCT/JP2005/020904

A. CLASSIFICATION OF SUBJECT MATTER
***B29C44/00***(2006.01), ***C08J9/04***(2006.01), *B29K105/24*(2006.01), *B29L31/50*(2006.01), *C08L9/00*(2006.01), *C08L23/04*(2006.01)

According to International Patent Classification (IPC) or to both national classification and IPC

B. FIELDS SEARCHED

Minimum documentation searched (classification system followed by classification symbols)
B29C44/00, C08J9/04, C08L9/00, C08L23/04, A43B13/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2000-198889 A (Mitsui Chemicals, Inc.), 18 July, 2000 (18.07.00), Full text & EP 997493 A1 & US 2003/0013778 A1 | 1-9 |
| A | JP 8-156004 A (Inoac Corp.), 18 June, 1996 (18.06.96), Full text (Family: none) | 1-9 |
| A | JP 2002-34601 A (Asics Corp.), 05 February, 2002 (05.02.02), Full text (Family: none) | 1-9 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 February, 2006 (03.02.06) | 14 February, 2006 (14.02.06) |
| Name and mailing address of the ISA/ Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000198889 A
- JP 3076326 B
- JP 5086411 B
- JP 6025311 A
- WO 9515985 A